Europäisches Patentamt

European Patent Office

Office européen des brevets

(19)

(11)  **EP 1 029 221 B1**

(12)  ## EUROPÄISCHE PATENTSCHRIFT

(45) Veröffentlichungstag und Bekanntmachung des Hinweises auf die Patenterteilung:
**08.08.2001   Patentblatt 2001/32**

(21) Anmeldenummer: **98951518.4**

(22) Anmeldetag: **13.10.1998**

(51) Int Cl.⁷: $G01C\ 19/72$

(86) Internationale Anmeldenummer:
**PCT/EP98/06482**

(87) Internationale Veröffentlichungsnummer:
**WO 99/24788 (20.05.1999 Gazette 1999/20)**

(54) **VERFAHREN ZUR VERMEIDUNG VON NULLPUNKTFEHLERN IN EINEM FASEROPTISCHEN SAGNAC-INTERFEROMETER**

METHOD FOR AVOIDING ZERO-POINT ERRORS IN AN OPTICAL FIBRE SAGNAC-INTERFEROMETER

PROCEDE PERMETTANT D'EVITER LES ERREURS DE RETOUR AU POINT ZERO DANS UN INTERFEROMETRE SAGNAC A FIBRES OPTIQUES

(84) Benannte Vertragsstaaten:
**DE FR GB**

(30) Priorität: **05.11.1997   DE 19748909**

(43) Veröffentlichungstag der Anmeldung:
**23.08.2000   Patentblatt 2000/34**

(73) Patentinhaber: **LITEF GmbH**
**79115 Freiburg (DE)**

(72) Erfinder:
- **HANDRICH, Eberhard**
  **D-79199 Kirchzarten (DE)**

- **SPAHLINGER, Günter**
  **D-70188 Stuttgart (DE)**
- **KEMMLER, Manfred**
  **D-79279 Vörstetten (DE)**

(74) Vertreter: **MÜLLER & HOFFMANN Patentanwälte**
**Innere Wiener Strasse 17**
**81667 München (DE)**

(56) Entgegenhaltungen:
**EP-B- 0 441 998          EP-B- 0 551 537**

**Beschreibung**

Die Erfindung bezieht sich auf ein Verfahren zur Vermeidung von Nullpunktfehlern in einem faseroptischen Sagnac-Interferometer zur Drehratenmessung und auf ein solches Sagnac-Interferometer, bei dem Nullpunktfehlerterme nicht auftreten.

Sagnac-Interferometer, die nach einem stochastischen Modulationsverfahren arbeiten sind in den Druckschriften EP 0 441 998 B1 und EP 0 551 537 B1 beschrieben.

Bei der Art der Modulation nach der EP 0 441 998 B1 wird der auf die Frequenz $f_0$ abgestimmte Phasenmodulator mit einem Signal moduliert, das sich zur Zeit $t_n$ aus einem deterministischen Anteil $d_n * \pi/4$ und einem stochastischen Anteil $s_n * \pi/2$ zusammensetzt, wobei $d_n$ periodisch zwischen +1 und -1 wechselt und $s_n$ stochastisch zwischen +1 und -1 wechselt. Das Detektorsignal wird mit $s_n * s_{n-1} * d_n$ von einem mit der Frequenz $f_0$ arbeitenden Synchrondemodulator demoduliert.

Koppelt nun ein Signal, das proportional zur Differenz zweier aufeinanderfolgender Phasenmodulatorwerte ist, z.B. die Flanken des Modulatorsignals, in den Detektorpfad ein, so entsteht ein Störsignal S, das sich wie folgt definieren läßt:

$$S = \gamma * [(d_n * \pi/4 + s_n * \pi/2) - (d_{n-1} * \pi/4 + s_{n-1} * \pi/2)], \text{ mit } \gamma: \text{Koppelfaktor}$$

$$= \gamma * [(d_n * \pi/2 + s_n * \pi/2 - s_{n-1} * \pi/2)]$$

$$= \gamma' * (d_n + s_n - s_{n-1}), \text{ mit } \gamma' = \gamma * \pi/2$$

Dieses Signal ist offensichtlich statistisch unabhängig vom Demodulationssignal. Liegt nun aber eine Nichtlinearität im Detektorpfad vor, so ergibt sich folgendes Bild:

Wird als Nichtlinearität die Funktion

$$f(x) = x - \alpha * x^3, \qquad (\alpha: \text{Nichtlinearitätsfaktor})$$

angenommen, dann wird aus obigem Signal S:

$$S' = S + S^3$$

$$= \gamma' * (d_n + s_n - s_{n-1}) + [\gamma' * (d_n + s_n - s_{n-1})]^3$$

$$= \gamma' * (d_n + s_n - s_{n-1}) + \gamma'^3 * [d_n^3 + s_n^3 - s_{n-1}^3 + 3 * s_n^2 * (d_n - s_{n-1})$$

$$+ 3 * s_{n-1}^2 * (d_n + s_n)$$

$$+ 3 * d_n^2 * (s_n - s_{n-1})$$

$$+ 6 * s_n * s_{n-1} * d_n)$$

Der letzte Summand entspricht dem Demodulatorsignal und erzeugt somit einen Nullpunktfehler.

Wählt man die Art der Modulation nach der EP 0 551 537 B1, so tritt bei einer Nichtlinearität im Detektor, Verstärker und/oder A/D-Wandler der gleiche Fehler wie oben beschrieben auf, wie durch Simulation nachgewiesen wurde.

Der Erfindung liegt die Aufgabe zugrunde, ein Verfahren anzugeben, mit dessen Hilfe dieser Nullpunktfehler bei Sagnac-Interferometern vermieden wird, die nach einem der Modulationsverfahren gemäß EP 0 441 998 B1 oder EP 0 551 537 B1 arbeiten.

Der Erfindung liegt die Erkenntnis zugrunde, daß das oben beschriebene Problem gelöst werden kann, wenn die Störung gegenüber dem eigentlichen Detektorsignal dekorreliert wird. Hierfür ist es zunächst wichtig, festzustellen, daß die Signalverfälschung durch Nichtlinearitäten im Detektorpfad (Detektor, Vorverstärker, A/ D-Wandler) instantan erfolgt, die Wirkung der Phasenmodulation selbst aber erst dann am Detektor auftritt, wenn das Licht den Weg vom Phasenmodulator zum Detektor zurückgelegt hat. Die auftretenden Signale sind also dann nicht korreliert, wenn die Laufzeit des Lichts vom Phasenmodulator zum Detektor größer ist, als die Zeit bis zum nächsten Modulationswechsel.

Auf der Grundlage dieser Erkenntnis ergeben sich erfindungsgemäß zwei Lösungsvarianten:

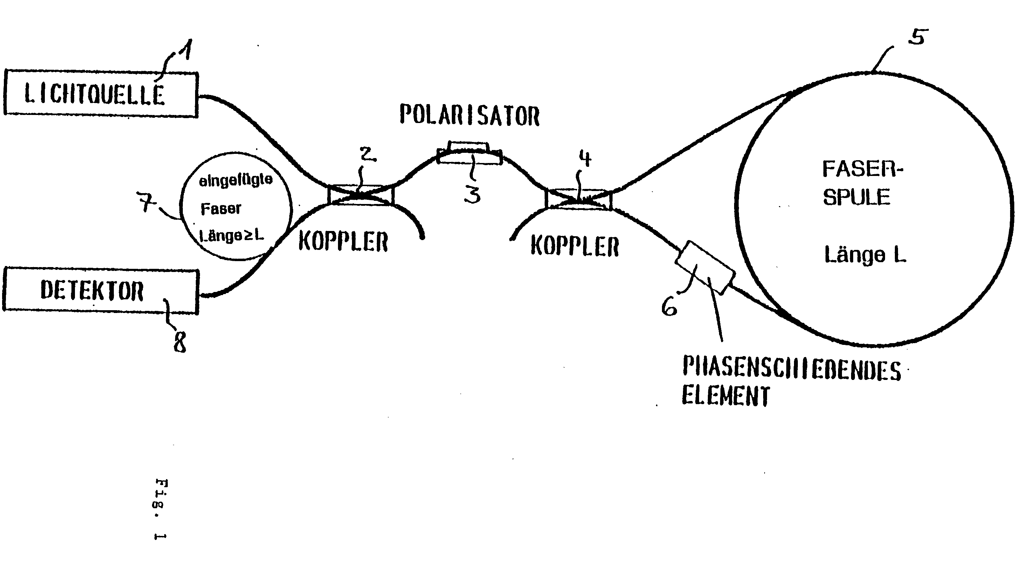

(1) Die Laufzeit des Lichts wird durch eine entsprechend lange Lichtleitfaser, die vor dem Detektor eingefügt wird und mindestens so lang ist wie die Sensorfaser verzögert, siehe z.B. Figur 1. Bei i-facher zusätzlicher Faser zur Verzögerung ändert sich das Demodulationssignal bei einer unveränderten Modulationsfrequenz $f_0$ in $s_{n-i} * s_{n-i-1} * d_{n-i}$, das Störsignal bleibt jedoch erhalten, so daß eine Dekorrelation erreicht wird. Das gilt auch für das Modulationsschema nach EP 0 551 537 A1, das nur statische Signale verwendet.

(2) Ähnliches wird erreicht, wenn die Modulationsfrequenz $f_0$ um ein ganzzahliges Vielfaches auf $i \cdot f_0$ erhöht wird, vorzugsweise ist i=2 oder i=3 gesetzt. Dabei ändert sich die Signalverarbeitung in der Schaltungsanordnung nach Fig. 2 der EP 0 551 537 B 1 entsprechend der hier beigefügten Figur 2. Wie in (1) erfolgt die Signalverfälschung durch Nichtlinearität spontan nach dem letzten Zyklus. Gemäß der Erfindung dagegen ist das Signal bzw. die Demodulation um i Zyklen versetzt, wodurch die angestrebte Dekorrelation erreicht wird.

Aus US 5,331,404 ist es für faseroptische Drehratensensoren zwar bekannt, zwischen einem optischen Koppler und einem Photodetektor eine Verzögerungsstrekke vorzusehen. Dies jedoch zu einem anderen Zweck, nämlich zur Unterdrückung bzw. Kompensation von in die Meß-Faserspule eingestreuten Rauschsignalen durch Nachbildung einer mit einem Polarisator versehenen Faserreferenzstrecke mit separatem Detektor.

Das erfindungsgemäße Verfahren ist im Patentanspruch 1 definiert.

Vorteilhafte Weiterbildungen des erfindungsgemäßen Verfahrens sind in den nachgeordneten abhängigen Patentansprüchen definiert.

Weitere Einzelheiten, Merkmale und Vorteile der Erfindung ergeben sich aus der nachfolgenden Beschreibung je eines Ausführungsbeispiels an Hand der Zeichnungen. Es zeigen:

**Figur 1**   einen erfindungsgemäßen Faserkreiselaufbau; und

**Figur 2**   eine erfindungsgemäß modifizierte Signalverarbeitung.

Der in der Figur 1 gezeigte Faserkreiselaufbau besteht aus einer Lichtquelle 1, deren Lichtstrahl über einen ersten Koppler 2 und einen Polarisator 3 an einen zweiten Koppler 4 geleitet wird, dort in zwei Lichtstrahlen aufgeteilt wird, die in entgegengesetzten Richtungen in eine Faserspule 5 mit der Länge L eingestrahlt und anschließend in dem Koppler 4 wiedervereinigt werden. Das entstehende Interferenzbild gelangt über den Polarisator 3, den ersten Koppler 2 und eine eingefügte Faser 7 mit einer Länge größer oder gleich L an einen Detektor 8, dessen Ausgangssignal der Lichtintensität entspricht. Die beiden Lichtstrahlen werden über ein in der Faserspule 5 liegendes phasenschiebendes Element 6, d.h. einen Phasenmodulator, durch ein aus mehreren variablen Anteilen bestehendes Signal moduliert, das sich zur Zeit $t_n$ zusammensetzt aus einem deterministischen Anteil $d_n * \pi/4$ und einem stochastischen Anteil $s_n * \pi/2$, wobei dn periodisch zwischen +1 und -1 wechselt und $s_n$ stochastisch zwischen +1 und -1 wechselt,

Die eingefügte Faser 7 ist die Verzögerungsfaser nach der ersten erfindungsgemäßen Variante, die zwischen Modulator 6 und Detektor 8 eingefügt werden muß. In dem dargestellten Beispiel ist sie zwischen dem ersten Koppler 2 und dem Detektor 8 angeordnet.

Die Realisierung der ersten erfindungsgemäßen Variante hat den Vorteil, daß das eigentliche Detektorsignal nicht verändert wird. Somit kann ein nach diesem Verfahren arbeitendes Sagnac-Interferometer mit den bisherigen Bauteilen realisiert werden, wobei durch die zusätzliche Faser und deren Verpackung aber höhere Kosten entstehen.

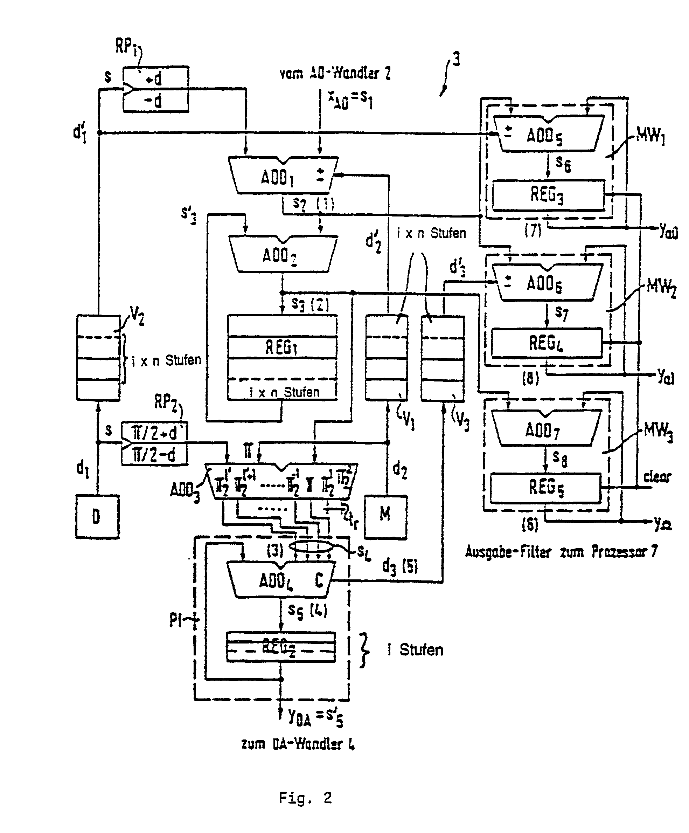

Die Figur 2 zeigt eine digitale Auswerteschaltung gemäß der EP 0 551 537 B1, die entsprechend der zweiten erfindungsgemäßen Variante abgeändert wurde. In bezug auf die grundsätzliche Funktion wird hier auf die Beschreibung des Sagnac-Interferometers, der Signalverarbeitung und der digitalen Auswerteschaltung , sowie der Funktionsweise in der EP 0 551 537 B1 verwiesen. Gemäß der zweiten erfindungsgemäßen Variante ist die Signalverarbeitung für ein ganzzahliges Vielfaches $i \cdot f_0$ der Modulationsfrequenz $f_0$ dahingehend abgeändert, daß sie mit der Taktrate $i \cdot f_0$ läuft. Weiter bestehen die Verzögerer $V_1$ bis $V_3$ und das erste Register $REG_1$ nicht mehr lediglich aus n Stufen, sondern aus i*n Stufen und anstelle des einfachen zweiten Registers $REG_2$ ist erfindungsgemäß ein aus i Stufen bestehendes zweites Register $REG_2$ vorhanden.

Der Vorteil der zweiten erfindungsgemäßen Variante liegt darin, daß im wesentlichen keine zusätzlichen Kosten entstehen. Zu beachten ist jedoch, daß das Detektorsignal verändert wird - es entstehen z.B. zusätzliche frequenzabhängige Amplitudenüberhöhungen. Außerdem muß eine höhere Modulationsfrequenz verwendet werden, so daß Änderungen elektronischer Baugruppen erforderlich werden.

Bei großen Faserlängen ist wegen der Faserkosten die zweite Verfahrensvariante zu bevorzugen, während bei geringeren Faserlängen wegen der hohen Sensorfrequenz nur das erste Verfahren in Betracht kommt. Die beiden erfindungsgemäßen Varianten ergänzen sich folglich je nach dem Grundkonzept des jeweiligen Interferometeraufbaus in spezifisch vorteilhafter Weise.

**Patentansprüche**

1. Verfahren zur Vermeidung von Nullpunktfehlern in einem faseroptischen Sagnac-Interferometer zur Drehratenmessung, bei dem

   zwei aus einer Lichtquelle (1) stammende, durch einen Polarisator (3) polarisierte und über einen Strahlteiler (4) erzeugte Lichtstrahlen in entgegengesetzten Richtungen in eine Faserspule (5) eingestrahlt und anschließend wiedervereinigt werden,
   das entstehende Interferenzbild nach Durchlauf durch den Polarisator (3) eine Photodetektoreinrichtung (8) beaufschlagt, deren Ausgangssignal der Lichtintensität des Interferenzbilds entspricht,
   die beiden Lichtstrahlen mittels eines in der Faserspule (5) liegenden Phasenmodulators (6) durch ein aus mehreren variablen Anteilen bestehendes Signal moduliert werden, das sich entweder zur Zeit tn zusammensetzt aus einem deterministischen Anteil $d_n*\pi/4$ und einem stochastischen Anteil $s_n*\pi/2$, wobei $d_n$ periodisch zwischen +1 und -1 wechselt und $s_n$ stochastisch zwischen +1 und -1 wechselt, oder das nur stochastische Signale verwendet,
   das verstärkte Photodetektorausgangssignal einem Synchrondemodulator zugeführt wird,
   das demodulierte Ausgangssignal mittels eines digitalen Integrators integriert und nach Digital/Analog-Wandlung mittels eines Digital/Analog-Wandlers auf den Phasenmodulator (6) zurückgeführt wird, um nichtreziproke Phasenverschiebungen der Lichtstrahlen zu kompensieren, und bei dem
   ein Prozessor die Steuer und Synchronisationssignale für den Synchrondemodulator, den Digital/Analog-Wandler und den digitalen Integrator liefert,

   **dadurch gekennzeichnet,** daß eine in den Detektorpfad einkoppelnde Störung, die proportional zur Differenz zweier aufeinanderfolgender Phasenmodulatorwerte ist, vom eigentlichen. Detektorsignal dekorreliert wird.

2. Verfahren nach Anspruch 1, **dadurch gekennzeichnet,** daß das Sagnac-Interferometer zur Dekorrelation so ausgelegt wird, daß die Laufzeit des Lichts vom Phasenmodulator (6) zur Detektoreinrichtung (8) größer ist, als die Zeit bis zum nächsten Modulationswechsel.

3. Verfahren nach Anspruch 1 oder 2, **dadurch gekennzeichnet,** daß eine Lichtverzögerungsstrecke (7), die wenigstens der Umlaufzeit des Lichts durch die Faserspule (5) entspricht, vor der Detektoreinrichtung (8) eingefügt wird, die Modulationsfrequenz des Phasenmodulators (6) auf eine Frequenz, $f_0$ gesetzt wird und der Synchron-demodulator mit der Frequenz $f_0$ betrieben wird.

4. Verfahren nach Anspruch 3, **dadurch gekennzeichnet,** daß es für geringe Faserlängen der Faserspule (5) eingesetzt wird.

5. Verfahren nach Anspruch 3 oder 4, **dadurch gekennzeichnet,** daß es für Faserlängen der Faserspule (5) unter 150 m eingesetzt wird.

6. Verfahren nach Anspruch 1 oder 2, **dadurch gekennzeichnet,** daß die Modulationsfrequenz des Phasenmodu-lators (6) zu $i \cdot f_0$ gesetzt und der Synchrondemodulator mit der Frequenz $i \cdot f_0$ betrieben wird, wobei i eine positive Ganzzahl ist.

7. Verfahren nach Anspruch 6, **dadurch gekennzeichnet,** daß i gleich zwei oder drei gesetzt wird.

8. Verfahren nach einem der Ansprüche Anspruch 6 oder 7, **dadurch gekennzeichnet**, daß es für Faserlängen der Faserspule (5) über 150 m eingesetzt wird.

**Claims**

1. A method for avoiding zero-point errors in an optical fibre Sagnac interferometer for revolution speed measurement, in which

   two light rays originating from a light source (1), polarised through a polariser (3) and produced by means of a beam splitter (4) are irradiated in opposite directions into a fibre bundle (5) and subsequently reunited,
   the interference figure arising therefrom, after passing through the polariser (3), acts upon a photodetector device (8) the output signal of which corresponds to the light intensity of the interference figure,

the two light rays, by means of a phase modulator (6) located within the fibre bundle (5), are modulated by a signal consisting of several variable portions, said signal either being composed, at the time $t_n$, of a deterministic portion $d_n*\pi/4$ and a stochastic portion $s_n*\pi/2$ wherein $d_n$ changes periodically between +1 and -1 and $s_n$ changes stochastically between +1 and -1, or making use of only stochastic signals,

the reinforced photodetector output signal is fed to a synchronous demodulator,

the demodulated output signal is integrated by means of a digital integrator and, after digital/analogue conversion by means of a digital/analogue converter, is fed back to the phase modulator (6) in order to compensate non-reciprocal phase displacements of the light rays, and in which

a processor supplies the control and synchronisation signals for the synchronous demodulator, the digital/ analogue transformer and the digital integrator,

characterised in that a disturbance coupling into the detector path and being proportional to the difference of two consecutive phase modulator values, is de-correlated from the actual detector signal.

2. A method according to claim 1, characterised in that the Sagnac interferometer is designed for de-correlation in such a way that the transit period of the light from the phase modulator (6) to the detector device (8) is greater than the period until the next modulation change.

3. A method according to claim 1 or 2, characterised in that a light deceleration route (7), which corresponds at least to the rotational circuit period of the light through the fibre bundle (5), is inserted before the detector device (8), the modulation frequency of the phase modulator (6) is set to a frequency $f_0$ and the synchronous demodulator is operated using the frequency $f_0$.

4. A method according to claim 3, characterised in that it is applied for use with short fibre lengths of the fibre bundle (5).

5. A method according to claim 3 or 4, characterised in that it is applied for use with fibre lengths of the fibre bundle (5) that are under 150 m. in length.

6. A method according to claim 1 or 2, characterised in that the modulation frequency of the phase modulator (6) is set at $i*f_0$ and the synchronous modulator is operated with the frequency $i*f_0$ whereby i is a positive integer.

7. A method according to claim 6, characterised in that i is set being equal to two or three.

8. A method according to one of the claims 6 or 7, characterised in that it is applied for use with fibre lengths of the fibre bundle (5) that are over 150 m. long.

**Revendications**

1. Procédé pour éviter des erreurs au point zéro dans un interféromètre Sagnac à fibres optiques pour la mesure de rotation, dans lequel

deux rayons lumineux provenant d'une source lumineuse (1), polarisés par un polarisateur (3) et produits par l'intermédiaire d'un séparateur de rayon (4) sont introduits dans des directions opposées dans une bobine de fibre (5) et sont ensuite réunis à nouveau,

l'image d'interférence formée est appliquée après passage par le polarisateur (3) à un dispositif photodétecteur (8) dont le signal de sortie correspond à l'intensité lumineuse de l'image d'interférence,

les deux rayons lumineux sont modulés au moyen d'un modulateur de phase (6) se trouvant dans la bobine de fibre (5) par un signal qui est constitué de plusieurs composantes variables et qui, soit est composé à l'instant $t_n$ d'une composante déterministe $d_n * \pi/4$ et d'une composante stochastique $s_n * \pi/2$, $d_n$ variant périodiquement entre + 1 et - 1 et $s_n$ variant de façon stochastique entre + 1 et -1, soit utilise seulement des signaux stochastiques,

le signal de sortie de photodétecteur amplifié est envoyé à un démodulateur synchrone,

le signal de sortie démodulé est intégré au moyen d'un intégrateur numérique et est renvoyé après conversion numérique-analogique au moyen d'un convertisseur numérique-analogique au modulateur de phase (6) pour compenser des déphasages non réciproques des rayons lumineux, et

un processeur fournit les signaux de commande et de synchronisation pour le démodulateur synchrone, pour le convertisseur numérique-analogique et pour l'intégrateur numérique,

**caractérisé en ce qu'**un parasite introduit dans le chemin de détecteur et proportionnel à la différence de deux valeurs de modulateur de phase successives est décorrélé du signal de détecteur proprement dit.

2. Procédé selon la revendication 1, **caractérisé en ce que** l'interféromètre Sagnac est conçu en vue de la décorrélation de telle sorte que le temps de propagation de la lumière du modulateur de phase (6) au dispositif détecteur (8) est plus grand que le temps jusqu'à la prochaine variation de modulation.

3. Procédé selon la revendication 1 ou 2, **caractérisé en ce qu'**une voie de retardement de lumière (7), qui correspond au moins au temps de circulation de la lumière dans la bobine de fibre (5), est insérée avant le dispositif détecteur (8), en ce que la fréquence de modulation du modulateur de phase (6) est réglée sur une fréquence $f_0$ et en ce que le démodulateur synchrone fonctionne avec la fréquence $f_0$.

4. Procédé selon la revendication 3, caractérisé en ce qu'il est utilisé pour de petites longueurs de fibre de la bobine de fibre (5).

5. Procédé selon la revendication 3 ou 4, **caractérisé en ce qu'**il est utilisé pour des longueurs de fibre de la bobine de fibre (5) inférieures à 150 m.

6. Procédé selon la revendication 1 ou 2, **caractérisé en ce que** la fréquence de modulation du modulateur de phase (6) est réglée sur $i \cdot f_0$ et en ce que le démodulateur synchrone fonctionne avec la fréquence $i \cdot f_0$, i étant un nombre entier positif.

7. Procédé selon la revendication 6, **caractérisé en ce que** i est égal à deux ou trois.

8. Procédé selon l'une des revendications 6 ou 7, **caractérisé en ce qu'**il est utilisé pour des longueurs de fibre de la bobine de fibre (5) supérieures à 150 m.

Fig. 1

LICHTQUELLE 1

DETEKTOR 8

eingefügte Faser Länge ≥ L 7

KOPPLER 2

POLARISATOR 3

KOPPLER 4

PHASENSCHIEBENDES ELEMENT 6

FASER-SPULE Länge L 5

EP 1 029 221 B1

Fig. 2